# EUROPEAN PATENT APPLICATION

(11) **EP 4 198 200 A1**
(43) Date of publication of application: **21.06.2023**
(21) Application number: 21215611.1
(22) Date of filing: 17.12.2021
(51) Int. Cl.: E01C 13/12, A63C 19/04, A63C 19/10, B29C 45/26, B29C 45/34, B29C 45/37

(54) **SNOW SIMULATING SKIING SURFACE**

(71) Applicant: Bioski AB, 821 91 Bollnäs (SE)
(72) Inventor: ENGLUND, Lars, Bollnäs (SE); VETTEBRAND, Kent, Gislaved (SE)
(74) Representative: Bjerkén Hynell KB

(57) **Abstract**

The present invention relates to a support plate (10) for skiing, comprising a generally flat base (12), a plurality of pins (14) disposed on said base and extending generally perpendicular to said base, a plurality of first pins (18) arranged with a first height (h1) along at least one extension (E) of said base (12), a plurality of second pins (20) arranged with a second height (h2) arranged on both sides of said at least one extension (E), where second height is larger than said first height for forming at least one track.

## Description

### TECHNICAL AREA

The present invention relates to a support plate for skiing not requiring snow, and in particular for classic cross-country skiing.

### BACKGROUND OF INVENTION

Cross-country skiing is a popular recreational activity for many people, and there are a number of skiing events around the world that attract participants. In some geographical areas, the presence and supply of snow may be very unpredictable and so alternative ways of practicing have evolved. For example, roller skis are popular among some skiers when there is no snow. However, for some, these are not liked because of lack of brakes and they generally do not work well if there is gravel or sand on the ground. Other more elaborate solutions involve indoor skiing arenas with temperatures below zero degrees centigrade. However, these solutions are rather costly both to build and maintain and since the skiing is performed indoors the skiing experience of being in the nature is lost.

Further solutions include specially designed surfaces, usually made of plastic material. These surfaces often consist of bristles or pegs that mimic snow. They have been used for a number of years in ski slope areas and in ski jumping arenas where the slopes and landing areas are covered with this type surface. They have also been tested for the skating style of cross-country skiing, but for classic cross-country skiing, they do not provide the same stability for the skis as with cross-country ski tracks made in snow.

From an environmental point of view, the plastic materials conventionally used are not optimal, being produced from fossil raw material such as oil. There is thus potential for improvements in this technical area.

### BRIEF DESCRIPTION OF INVENTION

The aim of the present invention is to remedy the drawbacks of the state of the art solutions in this technical area. This aim is solved by a support plate according to the independent patent claim. Preferable solutions of the invention form the subject of the dependent patent claims.

According to one aspect, the invention comprises a support plate for skiing, comprising a generally flat base, a plurality of pins disposed on the base and extending generally perpendicular to the base, a plurality of first pins arranged with a first height along at least one extension of the base, a plurality of second pins arranged with a second height arranged on both sides of the at least one extension, where second height is larger than the first height for forming at least one track. The solution thus provides a support plate for skiing that enables a skier to ski along tracks in the same way as during classic cross-country skiing on snow.

Preferably, the plurality of pins may be arranged in generally circular groups, which groups are positioned adjacent each other, and that adjacent groups go into each other. The base may further be provided with passages at the centre of at least a number of he groups. In order to have a stable gliding surface, a plurality of the first pins may be arranged in rows along the extension of the at least one track.

According to a further aspect, the plurality of pins may have a decreasing diameter along their extension from the base and the free ends of the pins may be rounded.

The support plate may be produced with thermo-plastic material comprising a base material, friction reducing material and UV stabilizing material. In this regard, the support plate may comprise 60 - 90 % base material and 40-10% friction reducing material, preferably 70 - 85 % base material and 30 - 15 % friction reducing material, and more preferably 75 - 85 % base material and 25 - 15 % friction reducing material. Moreover, the support plate may comprise 1 - 10% UV stabilizing material, preferably 1 - 5% UV stabilizing material and more preferably 1 - 2% UV stabilizing material. Preferably, at least the base material is bio-material. This provides for a more environmental-friendly solution and a

The invention may further comprise a tool for producing a support plate, which tool may comprise a number of sections, at least one central section designed with a plurality of cavities for forming said pins, and a second section designed with cavities for forming said base, producing said support plate when sections are brought together and said cavities are filled with material. The tool may further comprise an end section provided with recesses for forming the free ends of the pins when brought together with the at least one central section. Moreover, the second section may be arranged with a number of cores for creating the passages in the base, where at least some of the cores are in contact with the at least one central section when brought together. However, some of the cores may be designed not to contact the at least one central section when brought together for providing a flow path of material.

According to a further aspect, the tool may be arranged to produce a rectangular support plate, wherein the tool is provided with an inlet for material generally in the centre of one of the halves, and wherein the cores not in contact are arranged for providing a flow path from the inlet towards the corner of the rectangle.

The tool is preferably designed such that the cavities for forming the pins are provided with outlets for evacuate air from the cavities when filled with material. In this regard, space may be provided between the at least one central section and the end section for providing air outlets.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 is a perspective view of a support plate according to the invention,
Fig. 2 is a side view of the support plate of Fig. 1,
Fig. 3 is a detailed view of a track formed in the support plate of Fig. 1,
Figs. 4 and 5 are detailed views of attachment elements comprised in the support plate of Fig. 1,
Fig. 6 is a perspective view of two support plates according to Fig. 1 attached to each other to form two ski tracks,
Fig. 7 is a view from above of the support plate of Fig. 1, and
Fig. 8 is a detailed cross-sectional view of a tool for producing the support plate.

### DETAILED DESCRIPTION OF THE INVENTION

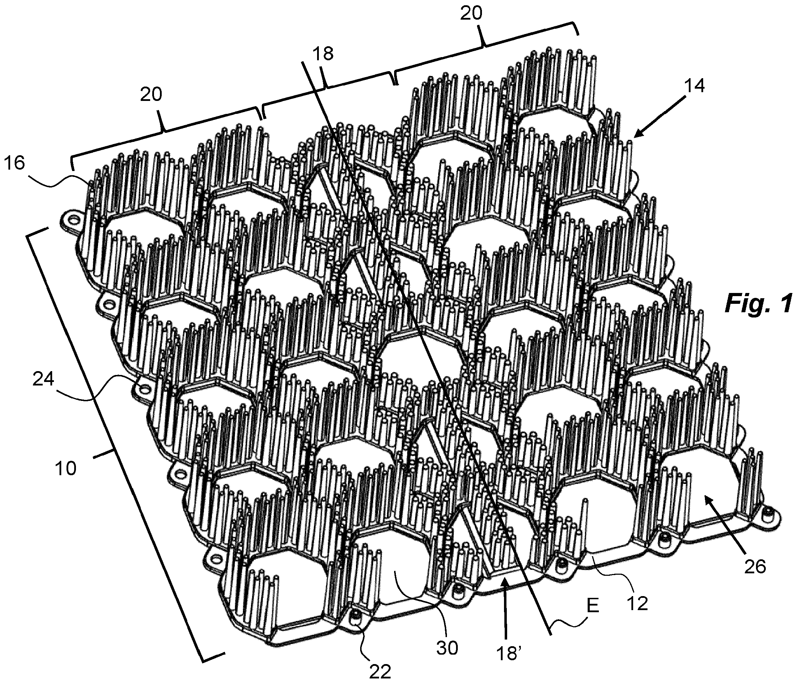

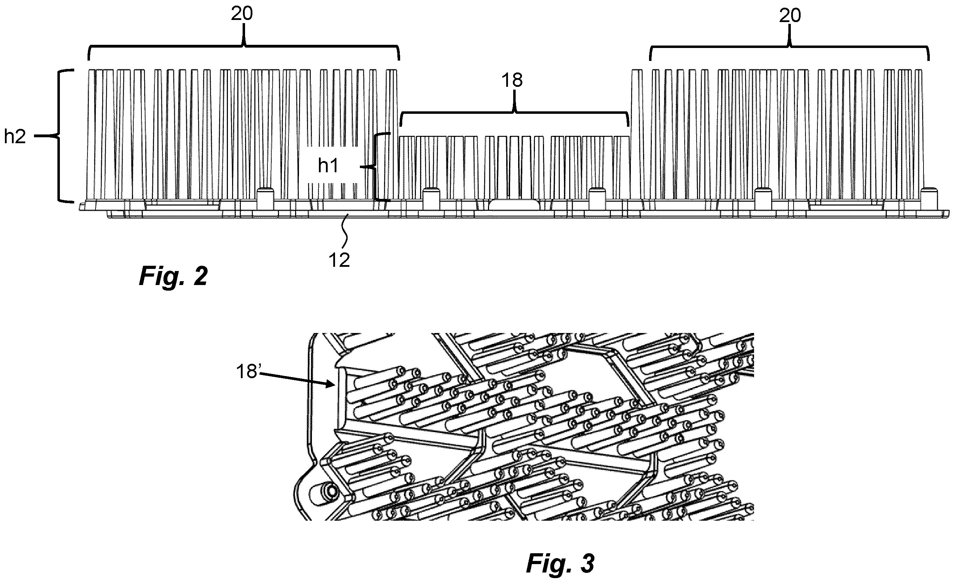

An embodiment of the invention is shown in the drawings. It comprises a support plate 10 for skiing, in turn comprising a generally flat base 12 that is generally rectangular and preferably a square with equal length on all four sides. From the base 12, a plurality of bristles or pins 14 extend generally perpendicular. The pins are oriented in generally circular groups 16, which groups in turn are arranged in rows that extend between opposite sides of the base. The circular groups 16 preferably go into adjacent groups. A plurality of pins, hereafter named first pins 18, have a first height (h1) along an extension E of the base 12 from one side to an opposite side, Fig. 1. On each side of these first pins 18, a plurality of pins, hereafter named second pins 20 are arranged, having a second height (h2) that is larger than the height of the first pins 18, Figs. 1 and 2. In this way a track is formed that functions as a ski track, where the second pins 20 guide a ski gliding along the extension of the first pins. Further, in order to provide a good support base for skis in the track, a plurality of first pins 18' are arranged in rows along the extension of the track as seen in Fig. 3. All pins 14 preferably have rounded free ends as seen especially in Figs. 2 and 3. The base plate 12 may further be provided with passages 32 within the circular groups 16 of pins.

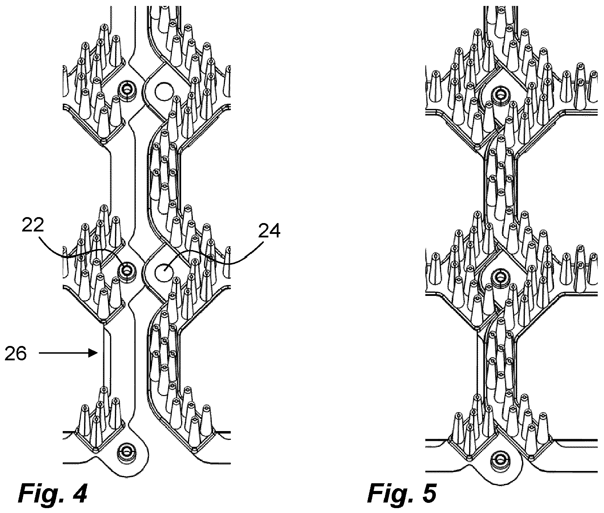

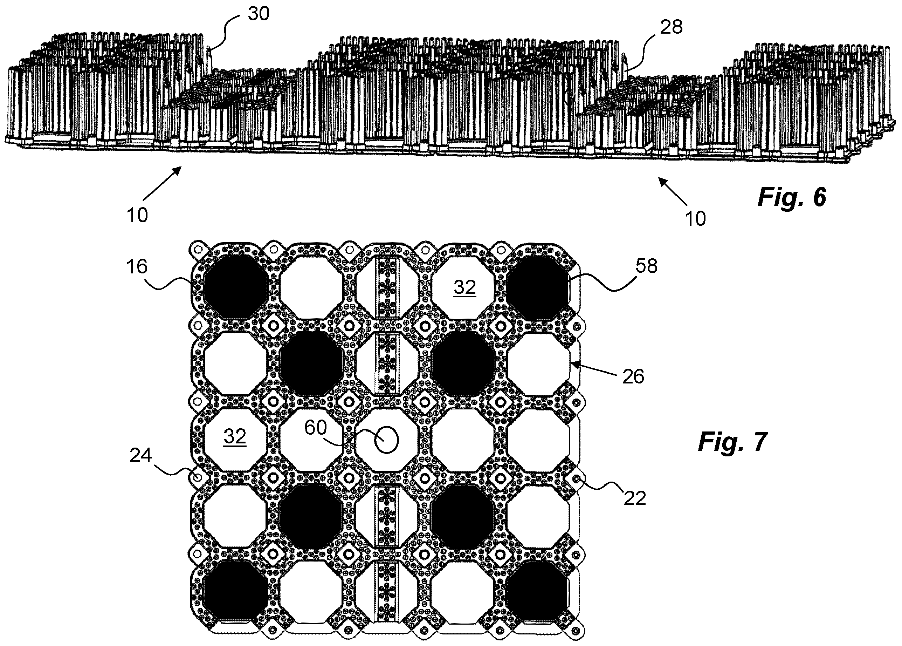

The base 12 is further provided with attachment elements for connecting several support plates to each other. In the embodiment shown, the attachment elements comprise upwardly extending protrusions 22 arranged along two adjacent sides of the base. These protrusions 22 are designed to fit into through going holes or passages 24 arranged along two other adjacent sides. As seen in Fig. 1, the protrusions 22 and holes 24 are positioned between circular groups of pins. Further, sections 26 of groups of pins on one side have been removed, into which sections 26 the groups of pins of an adjacent support plate fit so that the circular groups go into each other when two support plates are attached to each other as seen in Figs. 4-5. Fig. 6 shows two support plates 10 attached to each other, forming two tracks for skiing.

In an alternative design, a row of third pins 28 may be arranged on each side of the track, Fig. 6, having a height between the first height and the second height. As seen in Fig. 6, the free ends of the third pins 28 have chamfered surfaces 30 such that the track obtains somewhat sloping sides, providing a form that is close to ski tracks formed in snow.

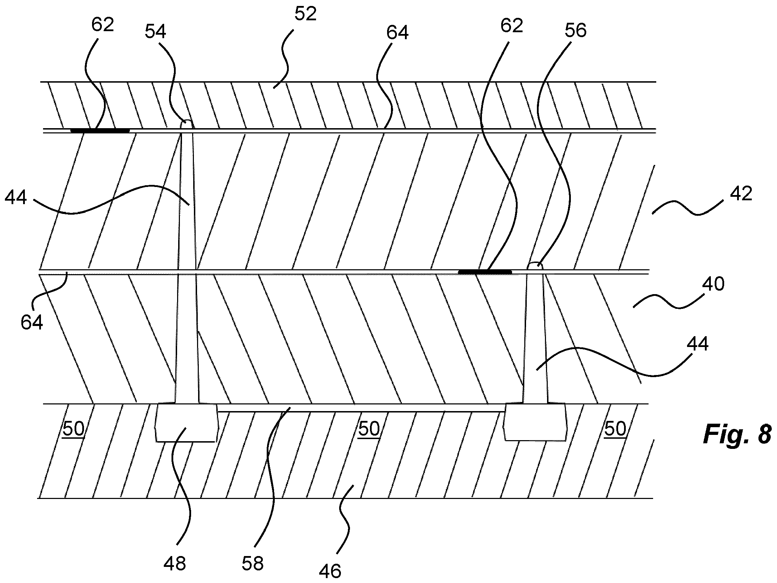

The support plate is preferably made by injection molding of plastic material in a mold. The mold may consist of several sections, Fig. 8, where a first and a second central section 40, 42 are provided with a plurality of cavities 44 for forming the pins 14, where two are shown in Fig. 8. A first end section 46 is attached to the first central section 40 and with cavities or recesses 48 for forming the base 12 and cores 50 to provide the passages 32 in the base. Further the cavities 44 for the pins in the central sections 40, 42 are through-going and the cavities for the longer pins are closed off by a second end section 52 while the cavities 44 for the shorter pins are closed off by the second central section 42 as seen in Fig. 8. The second end section 52 is preferably arranged with semi-spherical recesses 54 for forming the rounded free ends of the longer pins while the second central section 42 is provided with semi-spherical recesses 56 for forming the rounded free ends of the shorter pins.

In order to provide a good filling of material also out in the corners of the support plate, some of the cores have been made a bit shorter so that they do not contact the first end section, creating a space or passage 58 where the material can flow. As seen from Fig. 7, an injection inlet 60 is placed in the centre of the mold and the passages 58 (marked in black) are created diagonally from the inlet, ascertaining that material reaches the areas of the support plate furthest away from the inlet 60.

Further, for ascertaining that the cavities 44 for the pins are filled completely, it is important that air in the cavities of the mold can be evacuated. This may be done by placing shims 62 between sections, providing a small gap or space 64 therebetween, through which gap the air in the cavities for the pins may escape. This is an advantage in relation to having air outlets at the end of the cavities for the pins. Any material that might enter the air outlets do not form molding flash at the ends that may affect the glide properties of the support plate or cause wounds if a skier falls on the support plate.

Even if a support plate with one track has been described and shown in the drawings, it is to be understood that a support plate with two tracks may be produced in the same manner. For instance such a support plate may have a design such as shown in Fig. 6 but then made in one piece.

It is to be understood that the embodiments described above and shown in the drawings are to be regarded only as non-limiting examples of the invention and that it may be modified in many ways within the scope of the patent protection.

## Claims

1. Support plate (10) for skiing, comprising
- a generally flat base (12),
- a plurality of pins (14) disposed on said base and extending generally perpendicular to said base,
- a plurality of first pins (18) arranged with a first height (h1) along at least one extension (E) of said base (12),
- a plurality of second pins (20) arranged with a second height (h2) arranged on both sides of said at least one extension (E), where second height is larger than said first height for forming at least one track.

2. Support plate according to claim 1, wherein said plurality of pins are arranged in generally circular groups (16), which groups are positioned adjacent each other.

3. Support plate according to claim 2, wherein adjacent groups (16) go into each other.

4. Support plate according to claim 2 or 3, wherein said base (12) is provided with passages (32) at the centre of at least a number of said groups (16).

5. Support plate according to any of the preceding claims, wherein a plurality of said first pins (18') are arranged in rows along the extension (E) of said at least one track.

6. Support plate according to any of the preceding claims, wherein said plurality of pins (14) have a decreasing diameter along their extension from the base.

7. Support plate according to any of the preceding claims, wherein the free ends of the pins (14) are rounded.

8. Support plate according to any of the preceding claims, produced with thermo-plastic material comprising a base material, friction reducing material and UV stabilizing material.

9. Support plate according to claim 8, comprising 60 - 90 % base material and 40-10% friction reducing material, preferably 70 - 85 % base material and 30 - 15 % friction reducing material, and more preferably 75 - 85 % base material and 25 - 15 % friction reducing material.

10. Support plate according to claim 9, comprising 1 - 10% UV stabilizing material, preferably 1 - 5% UV stabilizing material and more preferably 1 - 2% UV stabilizing material.

11. Support plate according to any of the claims 8 - 10, wherein at least said base material is bio-material.

12. Tool for producing a support plate according to any of the claims 1 - 11, comprising a number of sections ((40, 42, 46, 52), at least one central section (40, 42) designed with a plurality of cavities (44) for forming said pins (14), and a second section (46) designed with recesses (48) for forming said base (12), producing said support plate when sections are brought together and said cavities are filled with material.

13. Tool according to claim 12, further comprising an end section (52) provided with recesses (54) for forming the free ends of the pins when brought together with the at least one central section (40, 42).

14. Tool according to claim 12 when dependent on claim 4, wherein said second section (46) is arranged with a number of cores (50) for creating said passages (32) in said base, where at least some of said cores (50) are in contact with said at least one central section (40) when brought together.

15. Tool according to claim 14, wherein some of said cores (50) are designed not to contact said at least one central section when brought together for providing a flow path (58) of material.

16. Tool according to claim 15, arranged to produce a rectangular support plate, which tool is provided with an inlet (60) for material generally in the centre of one of the sections, wherein said cores not in contact are arranged for providing a flow path from the inlet towards the corner of the rectangle.

17. Tool according to any of the claims 12 -16, wherein the cavities (44) for forming said pins are provided with outlets (64) for evacuate air from the cavities when filled with material.

18. Tool according to claim 17 when dependent on claim 13, wherein space (64) is provided between the said at least one central section (42) and said end section (52) for providing air outlets.
